Europäisches Patentamt

European Patent Office

Office européen des brevets

(19)

(11) Veröffentlichungsnummer: **0 057 909**
**B1**

(12)

# EUROPÄISCHE PATENTSCHRIFT

(45) Veröffentlichungstag der Patentschrift:
**16.01.85**

(51) Int. Cl.⁴: **B 60 P 3/32**

(21) Anmeldenummer: **82100780.4**

(22) Anmeldetag: **04.02.82**

(54) Wohnwagenaufbau.

(30) Priorität: **06.02.81 DE 8103178 U**
**16.04.81 DE 3115452**
**12.12.81 DE 3149368**

(43) Veröffentlichungstag der Anmeldung:
**18.08.82 Patentblatt 82/33**

(45) Bekanntmachung des Hinweises auf die Patenterteilung:
**16.01.85 Patentblatt 85/3**

(84) Benannte Vertragsstaaten:
**AT BE CH FR GB IT LI LU NL SE**

(56) Entgegenhaltungen:
**DE - A - 2 841 189**
**DE - A - 3 002 108**
**DE - U - 8 011 840**
**US - A - 3 496 689**
**US - A - 3 586 363**
**US - A - 3 659 894**

(73) Patentinhaber: **Bischoff, Rainer, Industriestrasse 12,
D-5403 Mülheim-Kärlich (DE)**

(72) Erfinder: **Bischoff, Rainer, Industriestrasse 12,
D-5403 Mülheim-Kärlich (DE)**

(74) Vertreter: **Hentschel, Peter, Dipl.-Ing.,
Hohenzollernstrasse 21, D-5400 Koblenz (DE)**

ACTORUM AG

## Beschreibung

Die Erfindung betrifft einen Wohnwagenaufbau in Form einer geschlossenen selbsttragenden, als Ganzes auf dem Fahrgestell eines Kraftfahrzeugs montierbaren Box, die aus aluminiumbeschichteten Kunststoff-Hartschaumplatten besteht.

Aus der US-A 3 496 689 ist es bekannt, auf ein Fahrzeug mit Ladepritsche und seitlich hochragenden, fahrzeugfesten Wänden einen unten und seitlich teilweise offenen, im Querschnitt etwa U-förmigen Aufbau aufzustülpen und daran zu befestigen, so dass dieser Aufbau zusammen mit den Teilen der Fahrzeugkarosserie einen Wohnwagenaufbau bildet. Dabei werden Sandwichplatten verwendet, die aussen aluminiumbeschichtet sind, innen Holz-Hartfaserplatten oder dgl. aufweisen und in der Mitte eine Schaumschicht haben, die der Wärmeisolierung dient. Um belastbar zu sein, wird dieser bekannte Aufbau in aufwendiger Weise im Dach durch eingebaute, im Querschnitt U-förmige Metalleisten und darin eingeleimte Holzträger ausgesteift. Andere Belastungen nimmt die Fahrzeugkarosserie auf. Für Wohnwagenaufbauten der eingangs genannten Art lässt sich diese Bauweise nicht verwenden, denn wenn der Wohnwagenaufbau die Form einer montierbaren Box aufweisen soll, fehlen die unteren Seitenwände, der Boden usw. und die Massnahmen zur Stabilisierung und Aussteifung des Hohlkörpers.

Ein Wohnwagenaufbau der eingangs genannten Art ist bereits bekannt. Dieser wird passend zu den Fahrgestellen der Kraftfahrzeuge angefertigt, als fertige Einheit auf den Fahrgestellrahmen aufgesetzt und mit diesem verschraubt. Er kann aber auch in kurzer Zeit wieder demontiert werden, so dass das Fahrzeug nach entsprechendem Umbau auch anderweitig genutzt werden kann.

Derartige Wohnwagenaufbauten bestehen aus vorgefertigten und miteinander verschweissten oder verschraubten Stahlrahmen, welche mit Sperrholz und aussen mit Bahnen aus Aluminiumblech verkleidet sind. Die Hohlräume zwischen den Stahlträgern sind mit Wärmedämmaterial ausgefüllt. Die Blechstösse sind zum Zweck der Abdichtung gegenüber Wasser miteinander verbördelt. Die Verbördelungsstellen sind mit Abdeckleisten verkleidet.

Diese Konstruktionen sind sehr stabil, erfordern jedoch einen sehr hohen Aufwand an Material, Montage und Kosten. Darüber hinaus sind sie sehr schwer von Gewicht, was einen hohen Energieverbrauch des den Aufbau tragenden Fahrzeugs verursacht.

Nachteilig ist weiterhin, dass die Wärmeisolierung unvollkommen ist, da die Stahlträger der Rahmenteile Kältebrücken bilden.

Man ist daher schon dazu übergegangen, derartige Aufbauten aus kaschierten Kunststoff-Hartschaumplatten (Polyurethan-Hartschaum) ohne Rahmen herzustellen, wodurch das Gewicht bedeutend verringert und der Zusammenbau vereinfacht wurden. Jedoch erweist sich bei dieser «Sandwich»-Bauweise die Verbindung der Aussenwände mit dem Dach infolge des nur wenig belastbaren Kunststoffmaterials als sehr problematisch. Um einen Untergrund für das Anbringen von Schraubstellen zu schaffen, werden daher in die Ränder der Hartschaumplatten Holz-

leisten eingearbeitet, welche eine feste Verbindung von Dach und Aussenwänden mittels Schrauben ermöglichen. Diese Schraubstellen müssen aber zur Abdichtung mit Blechbahnen überdeckt werden. Die dabei notwendigen Verbördelungen auf den Aussenwänden und an den Kanten des Aufbaus werden mittels entsprechend geformten Profilleisten abgedeckt.

Auch diese Bauweise ist immer noch zeit- und kostenaufwendig. Ausserdem müssen die Abdichtungen sehr sorgfältig ausgeführt sein, da sont die Gefahr der Entstehung von Undichtigkeiten besteht.

Aus der DE-A1 3 002 108 ist ein Wechselaufbau für Fahrzeuge bekannt, bei dem der gesamte Aufbau mit Dach und Seitenwänden einen einstückigen Körper in Sandwichbauweise bildet. Sogar der Boden soll, aus dem gleichen Prinzip hervorgehend, mit Dach und Seitenwänden einstückig geformt sein. Bei dieser Bauweise werden nicht näher bezeichnete Tragkörper in die Ecken und Stösse eingeschäumt, während die Aussenhaut der Sandwichplatten nahtlos über die Ecken hinweg vom Dach in die Seitenwände und von diesen in den Boden übergeht. Innen haben Wände, Dach und Boden eine Holzschicht.

Diese Bauweise garantiert zweifelsfrei eine hohe Festigkeit und einen dichten Aufbau. Die Herstellung dieses Wohnwagenaufbaus setzt jedoch komplizierte Formen und Vorrichtungen voraus, die nur bei genormter Form und Grösse verwendbar sind. In Form und Grösse wechselnde Wohnwagenaufbauten können nach dieser bekannten Bauweise nicht hergestellt werden. Infolge der Formen und Vorrichtungen ist der einzelne Aufbau auch teuer, denn die Hilfseinrichtungen müssen amortisiert werden. Ausserdem führt die Verwendung von Aluminium für die Aussenhaut und von Holz für die Innenoberflächen zu einer Asymmetrie der Sandwichplatten. Bei hohen Aussentemperaturen, z.B. durch Sonneneinstrahlung, oder bei extrem niedriger Aussentemperatur im Winter und höherer Innentemperatur durch Innenraumheizung entstehen infolge der unterschiedlichen Ausdehnungskoeffizienten von Aluminium und Holz Verwerfungen des gesamten Aufbaus. Dabei können sich so hohe Kräfte entwickeln, dass die Sandwichbox in Gefahrenzonen zumindest an der Aussen- oder Innenhaut reisst.

In der DE-U1 8 011 840 wird vorgeschlagen, Wohnwagenaufbauten in Sandwichbauweise dadurch zu erstellen, dass Aluminiumplatten zunächst in die Form des Aufbaus gebracht werden, bei runden Wandkonturen also entsprechend gebogen werden. Alsdann wird unter Verwendung eines lösungsmittelfreien Polyurethanklebers eine Styroporplatte aufgelegt und den Wandrundungen durch Biegen angepasst. Eine gleichermassen vorgeformte weitere Aluminiumplatte wird unter Verwendung des gleichen Klebers aufgebracht und das Ganze dann unter Druck und Wärme zu einem Sandwichbauteil vereint. Tür- und Fensteröffnungen werden anschliessend herausgeschnitten.

Ähnlich wie bei dem schon zuvor beschriebenen bekannten Wohnwagenaufbau ist auch in diesem Fall die Herstellung von teuren Formen und Vorrichtungen abhängig; denn Aluminiumplatten können weder frei in die Konturen des Aufbaus gebogen noch später unter Druck und Wärme gepresst werden. Dazu sind sehr grosse und teure Tiefziehpressen und -werkzeuge sowie ebenso grosse und teure beheizbare Pressformen erforderlich. Nach diesem Vorschlag können also nur Wohnwagenaufbauten einheitlicher Form und Grösse hergestellt werden und der Preis ist ausserdem hoch, weil sich selten so hohe Stückzahlen erzielen lassen, dass die Formen und Vorrichtungen ohne nennenswert erhöhte Preise amortisiert werden können.

Aus der US-A 3 586 363 ist als bekannt zu entnehmen, Tanks mit Hilfe von T-förmigen Profilen, die an Wandplatten befestigt werden, festzuhalten. Durch diese Massnahme sollen Raumprobleme bei einem Wohnwagenaufbau gelöst werden. Insbesondere soll die Tankkapazität für Treibstoff vergrössert werden. Hinweise auf den Wandaufbau, insbesondere die Verwendung von Sandwichplatten, enthält diese Druckschrift nicht. Es muss jedoch davon ausgegangen werden, dass massive Materialien für die Wände verwendet werden, weil sonst keine Möglichkeit bestünde, die T- bzw. L-Profile an der Wand so zu befestigen, dass sie in der Lage sind, das Gewicht der Treibstofftanks aufzunehmen.

Aufgabe der Erfindung ist es, einen Wohnwagenaufbau der eingangs genannten Art zu schaffen, bei dem Wände und Dach in beliebig wechselnden Formen und Abmessungen, ohne Verwendung teurer Pressen, Formen und Hilfsvorrichtungen, ausschliesslich aus kaschiertem Kunststoff-Hartschaum-Material hergestellt und trotzdem in einfacher und kostengünstiger Weise miteinander dauerhaft verbunden sind, derart, dass sich eine stabile Einheit ergibt, wobei gleichzeitig ein optimaler Wärmeschutz und eine sichere Abdichtung gewährleistet sein sollen.

Diese Aufgabe wird erfindungsgemäss durch einen Wohnwagenaufbau gelöst, dessen Wände und das Dach aus Sandwichplatten bestehen, die beidseitig mit Aluminium beschichtet sind und zwischen den Aluminium-Aussenschichten Kunststoffhartschaum, vorzugsweise Polyurethan, aufweisen, deren rechtwinklig aneinandergrenzende Enden in Aluminium-Profilleisten eingesteckt und durch einen speziellen Klebstoff, vorzugsweise einen Zwei-Komponenten-Klebstoff auf Polyurethan-Basis, zu einer Einheit miteinander verbunden sind. Der Wohnwagenaufbau besitzt eine Bodenplatte, die mittels eines innen an den aus mit Aluminium beschichteten Kunststoff-Hartschaumplatten gebildeten Wänden umlaufenden Aluminium-T-Profils befestigt ist. Die Aluminium-Profilleisten fassen die Seitenwände rundherum ein, derart, dass ein geschlossener Ringanker gebildet ist. Zur Stabilisierung sind am unteren Ende der Rückwand und in der Wand quer verlaufende, die aus den umlaufenden Aluminium-Profilleisten gebildeten seitlichen Ringanker miteinander verbindende Aluminium-Profilleisten eingeschweisst.

Hierdurch wird in einfacher Weise und schnell eine kompakte Box geschaffen, welche wetterfest und regensicher ausgebildet ist, gute wärmedämmende Eigenschaften besitzt und zudem leicht von Gewicht ist.

Sie kann schnell auf das Fahrgestell des Kraftwagens montiert werden und als Wohnmobil dienen.

Ebensogut kann sie, je nach Innenausbau, auch als Büroraum, Transportraum für Werkzeuge, Geräte oder Maschinen Verwendung finden.

Darüber hinaus besteht die Möglichkeit, die Einheit schnell wieder vom Fahrzeug zu demontieren, so dass letzteres als Nutzfahrzeug, beispielsweise mit einer Pritsche oder einem Aufbau versehen, eingesetzt werden kann. Besonders vorteilhaft ist auch die Tatsache, dass bei Verschleiss oder Defekt des Fahrzeugs die Box schnell auf beliebige andere Fahrzeuge montiert werden kann.

Durch die Verwendung eines lösungsmittelfreien Zwei-Komponenten-Klebers auf Polyurethan-Basis können die aluminiumbeschichteten Polyurethan-Hartschaumplatten und die Aluminium-Profilleisten dauerhaft miteinander verbunden werden. Der Kleber greift den Kunststoff-Hartschaum nicht an, sondern ist vielmehr gleich gut zum Verkleben von Kunststoff-Hartschaum und von Metallen geeignet. Bei dem Kleber handelt es sich um einen Gleitkleber, der nach mehreren Stunden erst aushärtet. Hierdurch wird das Zusammenstecken der Teile erleichtert. Nach dem Aushärten können die Teile nur durch spanabhebende Bearbeitung wieder getrennt werden.

Bei dem erfindungsgemäss ausgebildeten Wohnwagenaufbau wird von ebenen, als Meterware im Vorrat herstellbaren Sandwichplatten ausgegangen. Dadurch entfallen besondere Formen und teure Vorrichtungen. Auch dann, wenn die Sandwichplatten erst bei der Herstellung zusammengefügt werden, ist die Arbeit einfach und leicht, denn es werden ebene Zuschnitte aus Aluminiumblech und Hartschaum, gegebenenfalls auf Form vorgeschnitten, zusammengefügt. Biegeformen, räumlich gekrümmte Einschäumformen usw. entfallen. Auf jeden Fall ist dabei optimale Materialausnutzung durch geeignete Verteilung der Zuschnitte und damit kostengünstige Bauweise gesichert. Grösse und Form der Wand- oder Dachelemente können ohne Nachteil von Fall zu Fall wechseln. Da die Verklebung der Sandwichplatten in den Aluminium-Profilleisten einerseits problemlos durchzuführen ist, insbesondere, weil ein Gleitkleber verwendet wird und weil die Verklebung nach dem Aushärten nur noch spanabhebend trennbar ist, ergibt sich eine Verbindung, die hinsichtlich Festigkeit und Dichtheit den bekannten Ausführungen mit eingeschäumten Tragkörpern oder räumlich verformten Sandwichplatten nicht nachsteht. Der Wohnwagenaufbau ist eine nur noch spanabhebend zerlegbare Einheit. Dieser Vorteil wird erfindungsgemäss mit geringem Aufwand und bei geringen Kosten erzielt, weil Formen und Vorrichtungen entbehrlich sind und er ist bei wechselnden Formen und Grössen der Wohnwagenaufbauten erzielbar.

Die Tatsache, dass erfindungsgemäss die Seitenwände von den Aluminium-Profilleisten nach Art eines Ringankers umschlossen werden und dass die so gebildeten Ringanker weiterhin durch quer verlaufende Aluminium-Profilleisten verschweisst sind, führt zu einer bisher nicht erzielbaren hohen Belastbarkeit. Die Ringanker um die Seitenwandungen vermeiden früher auftretende, bei bekannten Ausführungen unvermeidliche Ermüdungsrisse in den Sandwichplatten im Bereich kerbspannungsgefährdeter Zonen. Darüber hinaus wird durch die Querversteifung eine auch bei wiederholtem Auf- und Absetzen oder bei hoher Belastung und Fahrtbelastung tragfähige, dauerhaft feste verwindungssteife Struktur erzielt, bei der nicht nur eine hohe Lebensdauer, sondern auch eine zuverlässige Wärme- und Feuchtigkeitsisolierung gesichert ist.

Weitere vorteilhafte Ausgestaltungen des Erfindungsgegenstandes sind den Unteransprüchen 2 bis 18 zu entnehmen.

Durch die Ausgestaltung gemäss Patentanspruch 2 wird die Montage und Demontage des erfindungsgemässen Wohnwagenaufbaus erleichtert.

Ein hoher Dichtigkeitsgrad und eine hohe Festigkeit werden durch die Ausführungsform nach Patentanspruch 3 erreicht. Ausserdem werden die Leisten, die normalerweise als Eckverbindung dienen, hierdurch überflüssig.

Ein lückenloser Wärmeschutz, auch im Bereich der Enden des erfindungsgemässen Aufbaus, wird durch die Ausgestaltung nach Patentanspruch 6 erreicht. Zu diesem Zweck werden in vorteilhafter Weise auf den im Innern des erfindungsgemässen Wohnwagenaufbaus liegenden Wandungen der Aluminium-Profilleisten verteilt Bohrungen angeordnet, durch welche die Kunststoffschaum-Komponenten in die Hohlräume eingebracht werden. Die Bohrungen dienen dabei gleichzeitig als Ausdehnungsräume für das sich bildende Kunststoffmaterial.

Die besondere äussere runde Form der stranggepressten Aluminium-Profilleisten gemäss Patentanspruch 7 hat den Vorteil, dass sämtliche Kanten des erfindungsgemässen Wohnwagenaufbaus glatt und gerundet sind, so dass keine Verletzungsgefahr besteht. Die paarweise vorstehenden Enden des Profils bilden Taschen, in die die aluminiumbeschichteten Kunststoff-Hartschaumplatten nach Einstecken Halt finden. Die Anschlagleisten geben den Platten eine klar definierte Endlage. Die Zahnleisten verhindern, dass sich die Platten nach Einstecken nochmals verschieben.

Durch die Ausführungsform gemäss Patentanspruch 8 wird der Sitz der aluminiumbeschichteten Kunststoff-Hartschaumplatten in den Taschen der Aluminium-Profilleisten noch verstärkt.

Vorteilhaft ist weiterhin die Ausführungsform gemäss Patentanspruch 9. Die Hartholz-Einlagen ermöglichen eine dauerhafte und sichere Befestigung der Bodenplatte und damit der gesamten Einheit auf den Fahrgestellrahmen mittels Schrauben, vorzugsweise Schlossschrauben. Zur Befestigung am Rahmen genügen zwölf Schrauben, die durch die Hartholz-Einlagen in der Bodenplatte geführt sind. Die Unterfläche der Bodenplatte ist zum Schutz gegen Feuchtigkeit mit Aluminium verkleidet. Der in die Hohlräume der Bodenplatte eingebrachte Polyurethan-Schaumstoff bewirkt eine gute Isolierung des erfindungsgemässen Wohnwagenaufbaus nach unten hin.

Durch die vorteilhafte Anordnung der Vorratskästen gemäss Patentanspruch 10 wird im Innern des erfindungsgemässen Wohnwagenaufbaus zusätzlicher Raum geschaffen. Bisher war es üblich, diese Kästen im Innenraum unterzubringen, wodurch viel Platz verlorenging.

Gemäss Patentanspruch 11 weisen die Innenräume der Kästen Tanks auf. Die Ausbildung der Kästen aus aluminiumbeschichteten Hartschaum-Kunststoffplatten gibt denselben grosse Festigkeit, so dass diese sich zur Aufnahme von Tanks besonders gut eignen. Darüber hinaus sorgt diese Verkleidung für eine gute Isolierung gegen Frost.

Die gemäss Patentanspruch 12 ausgebildeten Platten besitzen einen sehr hohen Isolationswert, hohe Stabilität und eine gute Witterungsbeständigkeit.

Nach Patentanspruch 13 besteht die Bodenplatte einstückig aus beidseits kaschiertem Kunststoff-Hartschaum. Hierdurch wird die Herstellung des Bodens des Wohnwagenaufbaus wesentlich vereinfacht. Zudem werden Kältebrücken vermieden. Ausserdem erhält der Boden eine besonders grosse Stabilität. Durch die Kaschierung der Bodenplatte auf ihrer Unterseite mit glasfaserverstärktem Kunststoff wird diese unempfindlich gegen Witterungseinflüsse.

Durch die vorteilhafte Ausgestaltung gemäss Patentanspruch 14 wird erreicht, dass die empfindlichen Schnittflächen der Sandwich-Platten gegen Witterungseinflüsse und Schlag und Stoss geschützt sind. Darüber hinaus wird durch diese Massnahmen die Dampfdichtigkeit der Konstruktion erhöht. Nicht zuletzt ist die Befestigung dieser speziellen Folien mühelos und einfach durchführbar.

Aufgrund des erfindungsgemässen Verfahrens gemäss Patentanspruch 15 ist es möglich, mühelos und unkompliziert einen Wohnwagenaufbau herzustellen, der sich durch seine besondere Stabilität, Kompaktheit und Dauerhaftigkeit auszeichnet und darüber hinaus hervorragende Dämmeigenschaften besitzt.

Gemäss der Weiterbildung nach Patentanspruch 16 sind weitere erhebliche Vorteile erzielbar. Die Boxen können unter Einsatz arbeitsrationalisierender Bohrschablonen, unabhängig vom jeweiligen Fahrzeugchassis, in der Werkstatt an der Bodenplatte mit den U-Profilstücken ausgerüstet und danach bereits innen fertig ausgebaut und vorgefertigt auf Lager genommen werden. Danach kann die insgesamt fertige Box, einschliesslich Innenausbau, auf das Chassis des jeweiligen Fahrzeugs aufgesetzt werden. Die U-Profilstücke erlauben es, den gesamten Wohngenaufbau längs der Chassisträger zu verschieben bis die gewünschte Sollposition erreicht ist; durch anschliessende Lochverschweissung erfolgt die Endfixierung.

Durch die Weiterbildung gemäss Patentanspruch 17 werden sowohl der feste Sitz der Aufnahmehülsen als auch der glatte Oberflächenverlauf der Bodenplatte gewährleistet.

Durch die vorteilhafte Weiterbildung gemäss Patentanspruch 18 wird einerseits Korrosionsbeständigkeit erzielt und andererseits werden Kältebrücken vermieden.

Die Erfindung ist anhand mehrerer Ausführungsbeispiele schematisch in den Zeichnungen dargestellt. Es zeigt:

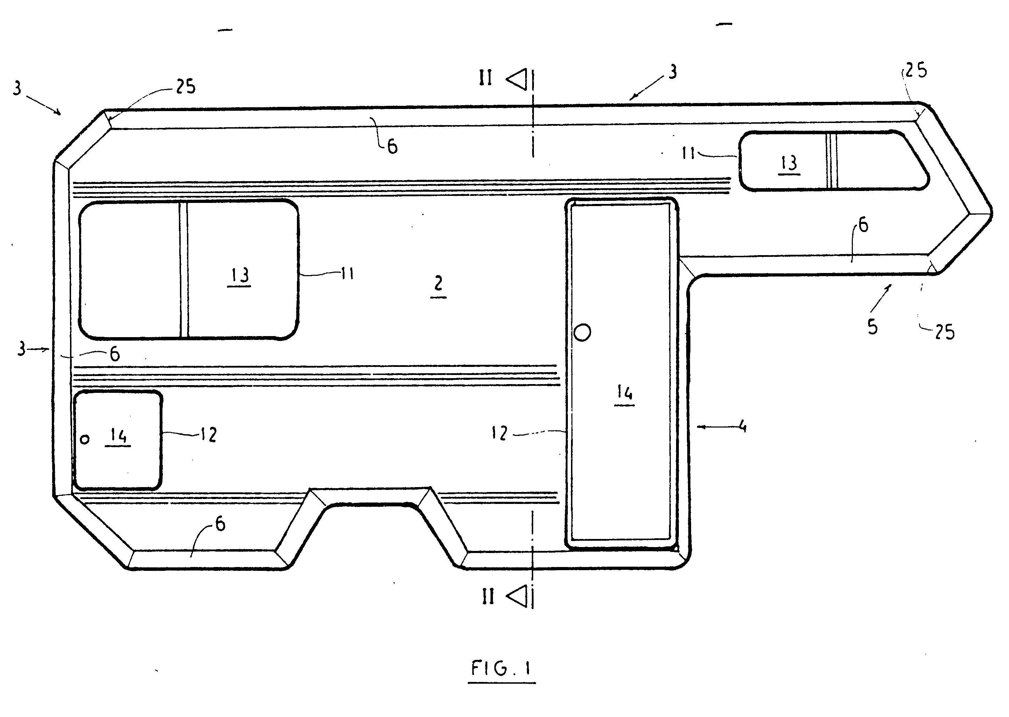

Fig. 1 eine Seitenansicht des erfindungsgemässen Wohnwagenaufbaus mit Alkovenausbildung,

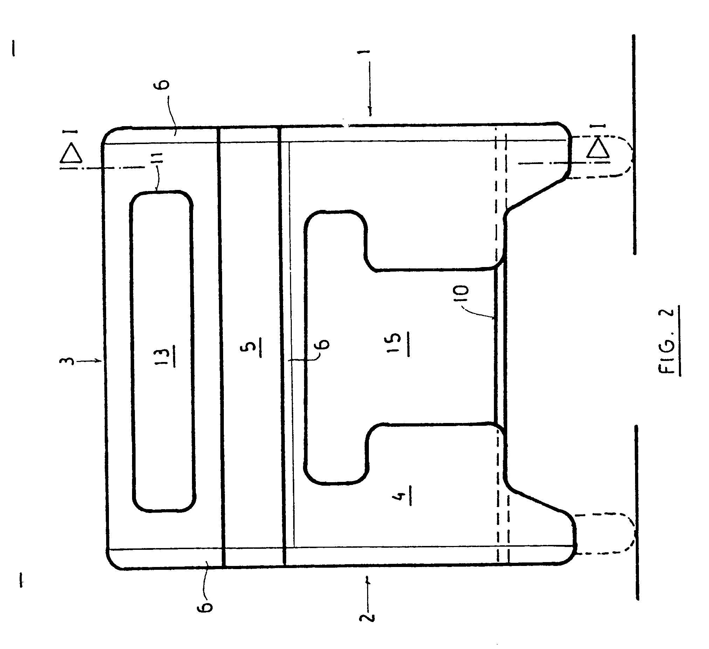

Fig. 2 die Vorderansicht des erfindungsgemässen Wohnwagenaufbaus,

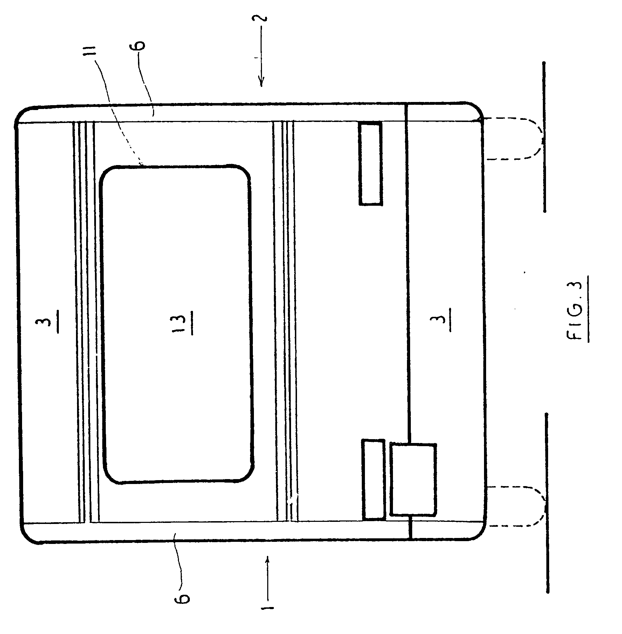

Fig. 3 die Rückansicht des erfindungsgemässen Wohnwagenaufbaus,

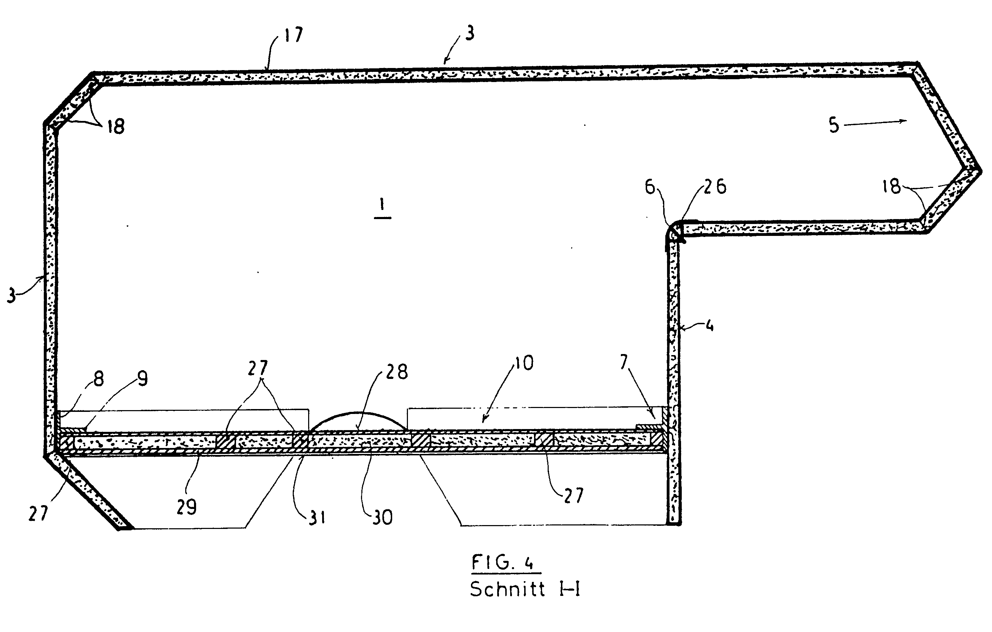

Fig. 4 einen Längsschnitt durch den erfindungsgemässen Wohnwagenaufbau mit Fussboden gemäss Linie I-I in Fig. 2,

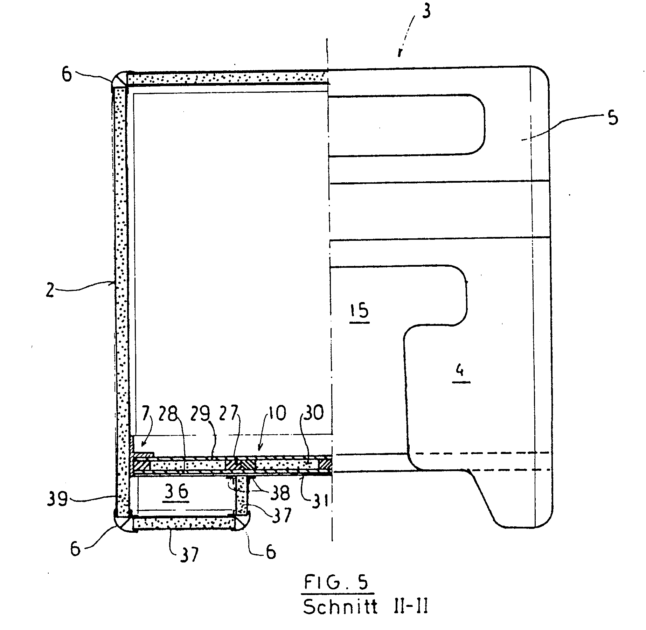

Fig. 5 einen Teil-Querschnitt durch den erfindungsgemässen Wohnwagenaufbau gemäss Linie II-II in Fig. 1 mit den eingebauten Vorratskästen unter der Bodenplatte,

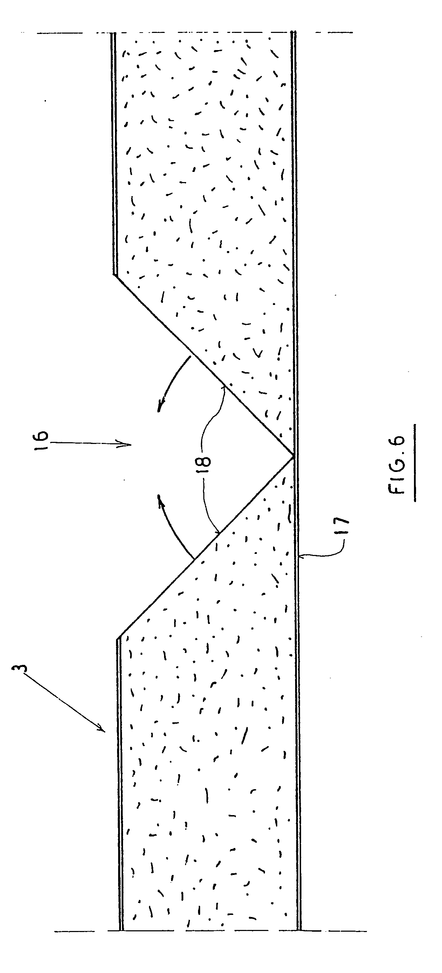

Fig. 6 einen Teilschnitt durch die Kunststoff-Hartschaumplatte zur Bildung des Bauteils für Rückwand, Dach und Alkoven vor dem Biegen in die endgültige Form in vergrösserter Darstellung,

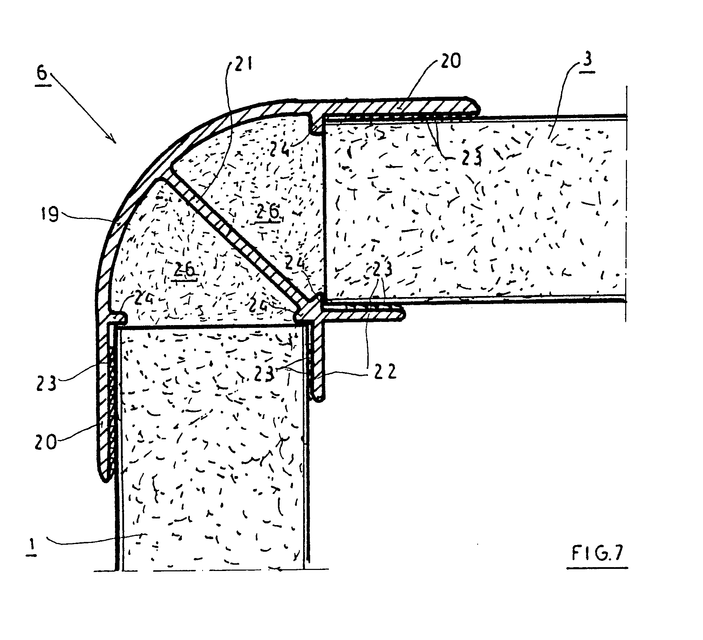

Fig. 7 die Eckverbindung der Kunststoff-Hartschaumplatten für Dach und Seitenwandung mittels erfindungsgemässer Aluminium-Profilleisten im Schnitt in vergrösserter Darstellung,

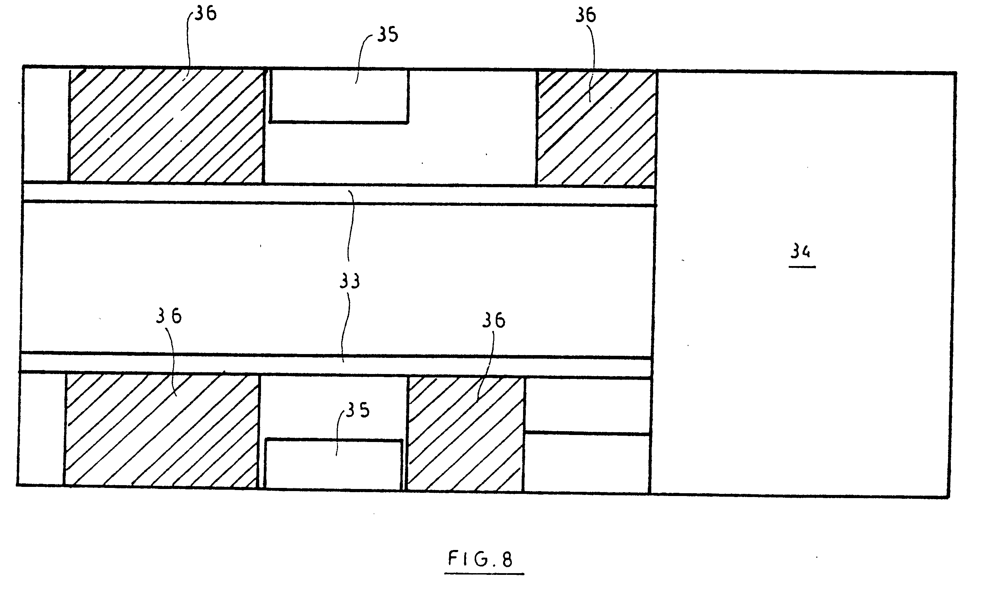

Fig. 8 eine schematische Grundrissdarstellung des erfindungsgemässen Wohnwagenaufbaus sowie des Fahrzeugs mit den Vorratskästen,

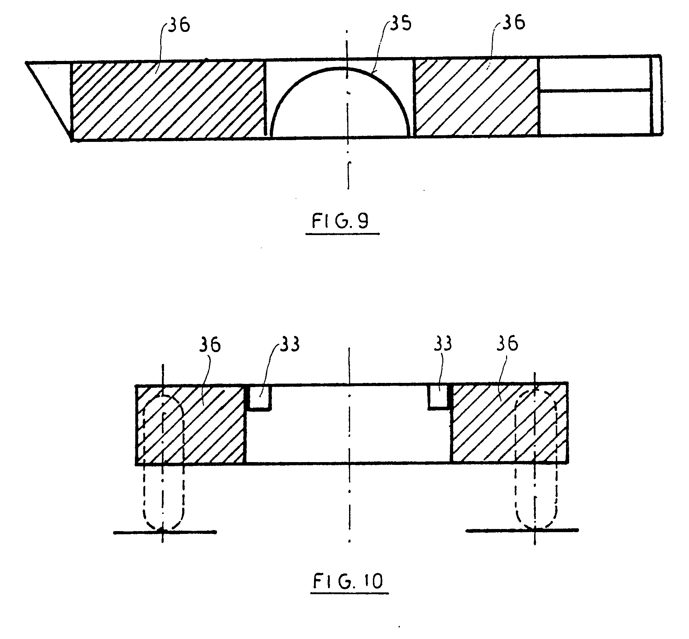

Fig. 9 schematisch einen Teil-Längsschnitt durch den unteren Teil des erfindungsgemässen Wohnwagenaufbaus mit den Vorratskästen und den Radkästen,

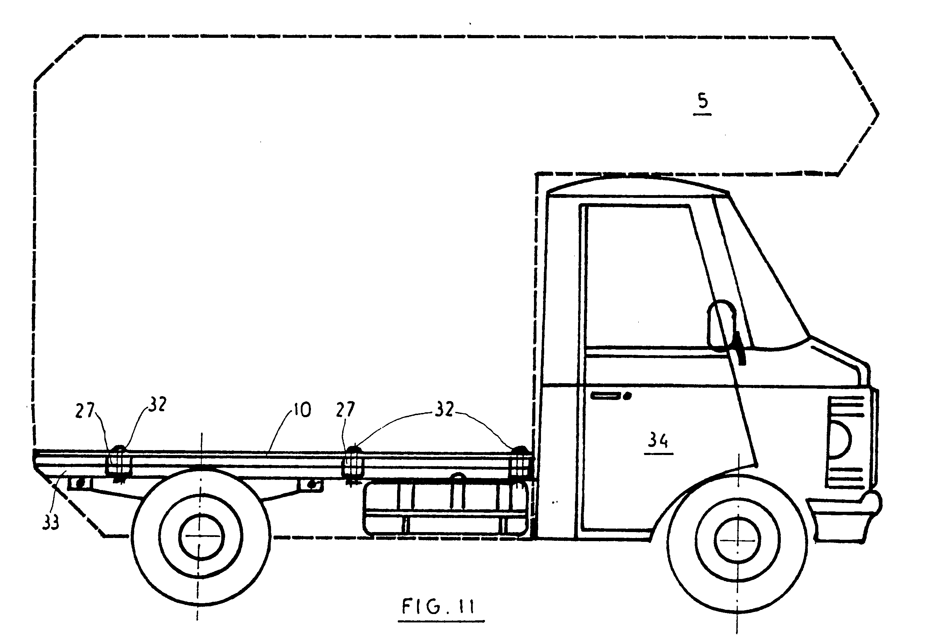

Fig. 10 schematisch einen Teil-Querschnitt durch den unteren Teil des erfindungsgemässen Wohnwagenaufbaus im Bereich der Vorratskästen mit Rahmenträgern,

Fig. 11 schematisch die Ansicht des auf das Fahrzeug montierten erfindungsgemässen Wohnwagenaufbaus mit Teillängsschnitt durch Bodenplatte und die Schraubbefestigung derselben,

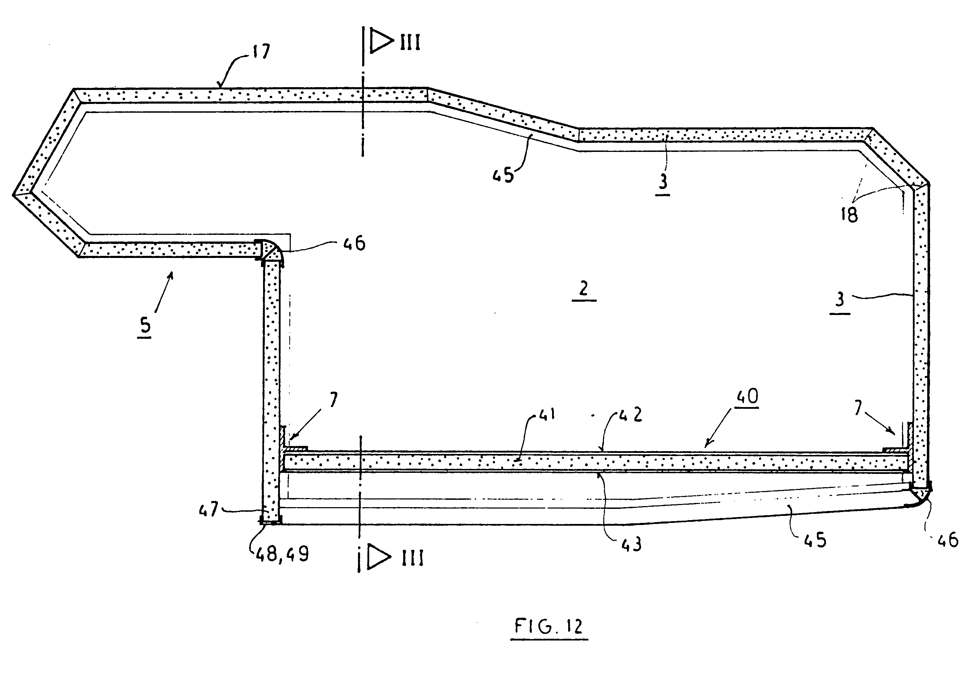

Fig. 12 einen Längsschnitt durch eine andere Ausführungsform des erfindungsgemässen Wohnwagenaufbaus mit Schnitt durch die aussteifenden, quer angeordneten Aluminium-Profilleisten und einer durchgehenden Sandwichplatte als Fussboden,

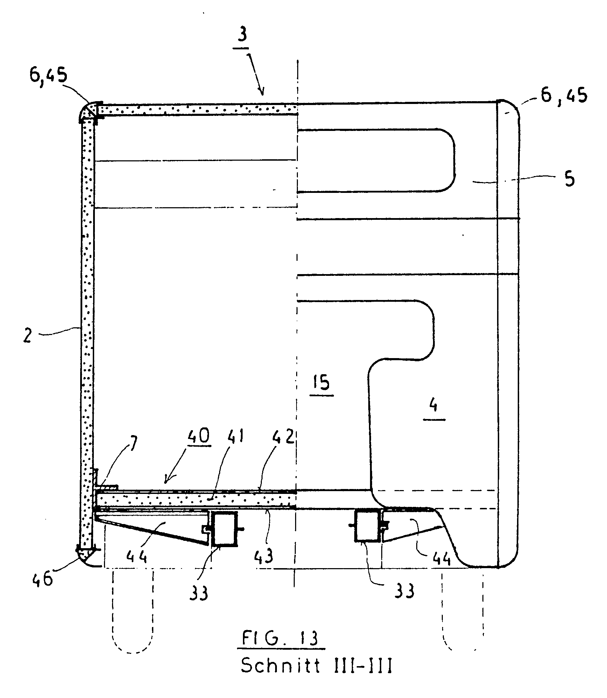

Fig. 13 einen Teil-Querschnitt durch die Ausführungsform der Fig. 12 gemäss Linie III-III in Fig. 12 ohne Vorratskästen, mit als Ringanker wirkenden, umlaufenden Aluminium-Profilleisten sowie mit Blick auf die an den Rahmenträgern des Kraftfahrzeugs angeschweissten, die Bodenplatte unterstützenden Kragträgern,

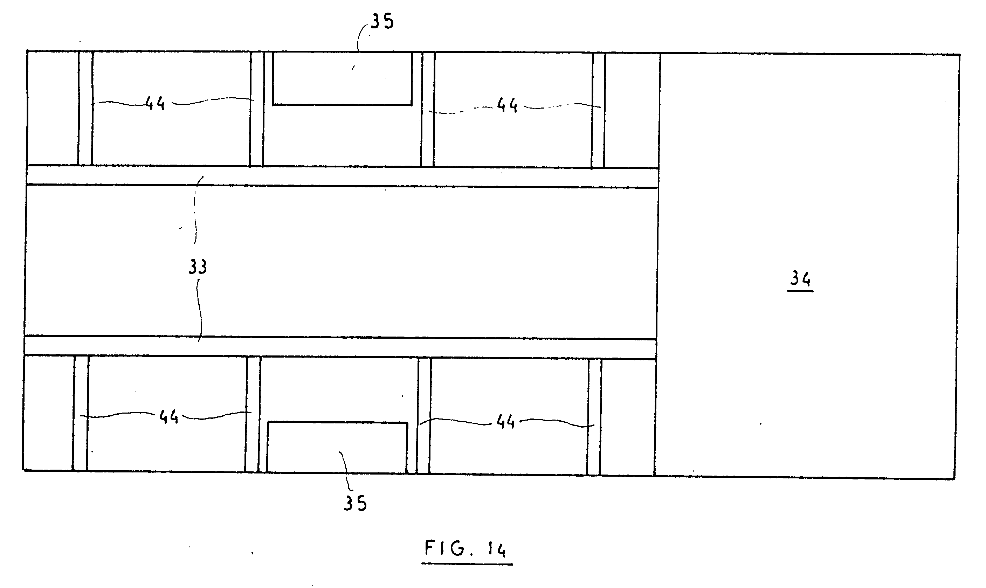

Fig. 14 eine schematische Grundrissdarstellung des erfindungsgemässen Wohnwagenaufbaus gemäss der Ausführungsform nach den Fig. 12 und 13 sowie des Fahrzeugs mit an den Rahmenträgern angeschweissten Kragträgern, ohne Vorratskästen,

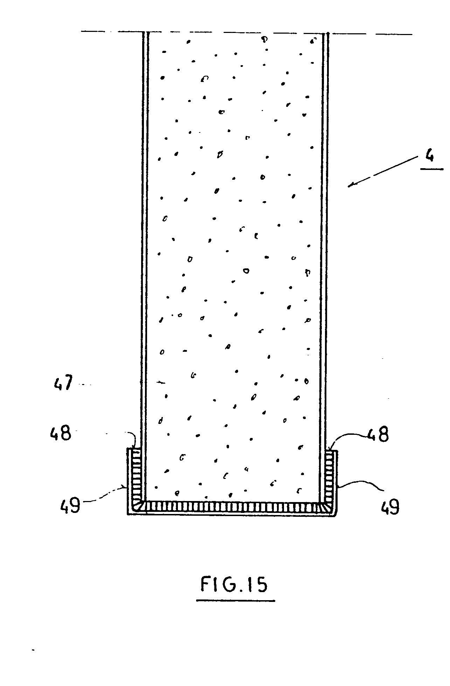

Fig. 15 einen Schnitt durch eine freie Kante einer mit Aluminium beschichteten Kunststoff-Hartschaumplatte in vergrösserter Darstellung mit Abdichtung durch eine mit selbstklebendem Kautschuk beschichteten Aluminiumfolie,

Fig. 16 eine Teilschnittansicht der Bodenplatte mit befestigtem U-Profilstück,

Fig. 17 eine perspektivisch auseinandergezogene Darstellung der Verbindung: Bodenplatte, U-Profilstück, Fahrzeugträger und

Fig. 18 eine Teildraufsicht der Bodenplatte.

Das in den Zeichnungen beschriebene und dargestellte Ausführungsbeispiel des erfindungsgemässen Wohnwagenaufbaus besteht aus 5 cm starken Polyurethan-Hartschaumplatten, welche beidseitig mit ca. 1 mm starkem chromatisiertem Aluminium beschichtet sind. Es handelt sich um die Platten 1, 2 für die beiden Seitenwände, die Platte 3 für das Dach mit Rückwand und Alkoven sowie die Platte 4 für den Vorderwandteil unter dem Alkoven.

Die rechtwinklig aneinandergrenzenden Enden der Platten 1, 2, 3, 4 sind in stranggepressten Aluminium-Profilleisten 6 eingesteckt und durch einen geeigneten Klebstoff zu einer Einheit miteinander verbunden. In den Innenwandungen der Platten 1, 2, 3, 4 ist ein umlaufendes Aluminium-T-Profil 7 mittels eines geeigneten Klebers und Nieten derart befestigt, dass die Flansche 8 an den Plattenwandungen anliegen, während der Stegteil 9 horizontal angeordnet ist und als Auflage für die Bodenplatte 10 dient. Letztere ist mittels Schrauben am Stegteil 9 befestigt.

Durch die Verwendung eines T-Profils 7 wird eine besonders schärfeste Verbindung geschaffen, so dass ein Abreissen der Bodenplatte 10 auch bei stärkster Beanspruchung, beispielsweise infolge Schlaglöcher, nicht eintreten kann.

In den Platten 1, 2, 3, 4 können an geeigneten Stellen Fenster- und Türöffnungen 11 bzw. 12 ausgeschnitten werden, in die wärmeisolierende Verbundglasfenster 13 bzw. wärmeisolierende Türen eingebaut werden können.

In der Vorderwand 4 unter dem Alkoven 5 kann eine grosse Ausnehmung 15 zur Verbindung des erfindungsgemässen Wohnwagenaufbaus mit dem Fahrerhaus vorgesehen sein.

Unter der Bodenplatte 10 können hydraulisch oder mechanisch ausfahrbare Stützen zur leichteren Montage und Demontage des Wohnwagenaufbaus angeordnet sein.

Das den Alkoven, das Dach und die Rückwand bildende Teil 3 wird in der Weise nahtlos hergestellt, dass auf der Innenseite der aluminiumbeschichteten Polyurethan-Hartschaumplatte, an den Stellen, an denen Richtungsänderungen in der Platte vorgenommen werden müssen, quer verlaufende, V-förmige Ausschnitte 16 angeordnet werden, wobei die Aluminium-Aussenhaut 17 unversehrt bleibt, derart, dass die Platte 3 jeweils im Bereich der Ausschnitte 16 um die Aussenhaut 17 in einem Winkel von etwa 45° zueinander gebogen werden können, bis die benachbarten Gehrungsflächen 18 der Platte 3 aufeinanderliegen und das Teil die gewünschte Form eingenommen hat. Die Gehrungsflächen 18 werden mittels eines Zwei-Komponenten-Klebstoffs auf Polyurethan-Basis dauerhaft miteinander verbunden.

Die Aluminium-Profilleisten 6, die zur Verbindung der rechtwinklig aneinanderstossenden Platten 1, 2, 3, 4 dienen, besitzen im Querschnitt gesehen eine viertelkreisförmige Rundung 19, die in geraden Enden 20 ausläuft. In radialer Richtung ist innen an die viertelkreisförmige Rundung 19, diese halbierend, im Winkel von etwa 45°, ein Profilsteg 21 angeformt, an dessen freiem Ende im rechten Winkel zueinanderstehende, parallel zu den jeweiligen gegenüberliegenden Enden 20 verlaufende Enden 22 angeformt, derart, dass Aufnahmetaschen für die Platten 1, 2, 3, 4 gebildet sind. Die Innenwandungen der Enden 20 und 22 tragen jeweils in Längsrichtung des Profils und parallel zueinander verlaufende, im Querschnitt widerhakenförmige Zahnleisten 23, welche die Platten 1, 2, 3, 4 nach Einstecken festhalten. Als Anschlag für die Platten 1, 2, 3, 4 sind an den Profilinnenwandungen jeweils einander gegenüberliegende Anschlagleisten 24 angeordnet.

Die Aluminium-Profilleisten 6 sind an den Enden auf Gehrung geschnitten. Sie liegen an den Ecken mit ihren Gehrungskanten 25 aneinander und sind durch Verschweissen miteinander fest verbunden.

Die Hohlräume 26 in den Aluminium-Profilleisten 6 zur rechtwinkligen Verbindung der Platten 1, 2, 3, 4 werden nach Montage derselben mit Kunststoff ausgeschäumt.

Die Bodenplatte 10 besteht aus einem Hartholzrahmen 27 mit Zwischenausfachungen aus demselben Material, der mit wasserfest verleimten Sperrholzplatten 28, 29 abgedeckt ist. Die Hohlräume 30 sind mit isolierendem Polyurethan-Schaum ausgefüllt. Die Unterfläche ist mit einer durchgehenden Aluminiumplatte 31 abgedeckt. Die Bodenplatte 10 wird mittels Schrauben 32, welche die Hartholzrahmen-Teile durchdringen, an den Fahrgestell-Rahmenträgern 33 des Fahrzeugs 34 befestigt.

Unter der Bodenplatte 10, vor und hinter den Radkästen 35, sind Vorratskästen 36 befestigt. Sie bestehen ebenfalls aus mit aluminiumbeschichteten Polyurethan-Hartschaumplatten 37, welche mittels Aluminium-Profilschienen 6 auf die gleiche Art wie die Platten 1, 2, 3, 4 miteinander verbunden sind. Zur Halterung unter der Bodenplatte 10 dienen Winkelleisten 38. Die jeweils aussenliegende Wandung der Kästen 36 wird durch den verlängerten Aussenwandteil 39 des Wohnwagenaufbaus gebildet.

Ein weiterer wesentlicher Vorteil der neuen Konstruktion mit Alkoven besteht insbesondere darin, dass dieser Aufbau aufgrund der Kompaktheit der Gesamtkonstruktion sich selbst trägt und Materialspannungen, die bei den herkömmlichen Herstellungsverfahren besonders an der Knickstelle zwischen Alkovenboden und der zum Fahrerhaus anschliessenden Vorderwand punktweise aufgetreten sind und zu Rissbildungen geführt haben, sich gar nicht erst in konzentrierter Form bilden. Sie verteilen sich gleichmässig auf die gesamte Konstruktion.

Gemäss einer anderen vorteilhaften Ausführungsform der Erfindung ist die Bodenplatte 40 ganz ohne Innenrahmen ausgebildet. Sie besteht aus einer einstückigen Kunststoff-Hartschaumplatte 41, die auf ihrer Oberseite mit einer Sperrholzschicht 42 und auf ihrer Unterseite mit einer Schicht aus glasfaserverstärktem Kunststoff 43 kaschiert ist. Die Befestigung der Bodenplatte 40 erfolgt in gleicher Weise wie die der Bodenplatte 10.

Um dem Boden auch seitlich eine gute Unterstützung zu geben, sind rechtwinklig an den Rahmenträgern 33 des den erfindungsgemässen Wohnwagenaufbau tragenden Kraftfahrzeugs aussen Kragträger 44 angeschweisst. Auf diese Weise wird der Wohnwagenaufbau nicht nur von den Rahmenträgern 33, sondern zusätzlich auch von den Kragträgern 44 gehalten.

In der vorteilhaften Weiterbildung der Erfindung sind zum Zweck der Stabilisierung des Wohnwagenaufbaus die die Aussenwände desselben bildenden, mit Aluminium beschichteten Kunststoff-Hartschaumplatten rundherum durch Aluminium-Profilleisten 6 eingefasst, derart, dass ein geschlossener Ringanker 45 gebildet ist. Ferner sind am unteren Ende der Rückwand und in der Wand unterhalb des Alkovens quer zu den Ringankern 45 verlaufende, dieselben miteinander verbindende Aluminium-Profilleisten 46 eingeschweisst. In diese quer verlaufenden Aluminium-Profilleisten 46 sind die die Wände usw. bildenden benachbarten Platten eingesteckt.

In weiterer vorteilhafter Ausgestaltung der Erfindung sind die freien Schnittkanten 47 der den Aufbau bildenden, mit Aluminium beschichteten Kunststoff-Hartschaumplatten durch eine mit selbstklebendem Kautschuk 48 beschichteten Aluminiumfolie 49 abgedichtet.

Es versteht sich von selbst, dass die beschriebenen und dargestellten Ausführungsformen des erfindungsgemässen Wohnwagenaufbaus nur zwei verschiedene vorteilhafte Ausgestaltungsformen des Erfindungsgedankens darstellen, die keineswegs hierauf allein beschränkt sein sollen. So kann der erfindungsgemässe Wohnwagenaufbau auch ohne Alkoven ausgebildet sein. Bei dieser Ausführungsform besteht der Wohnwagenaufbau in vorteilhafter Weise nur aus drei einstückigen, beiderseits mit Aluminium beschichteten Kunststoff-Hartschaumplatten, nämlich den beiden Seitenwänden sowie dem Dach mit der nahtlos daran anschliessenden Vorder- und Rückwand, welche zusammen einen Teil bilden.

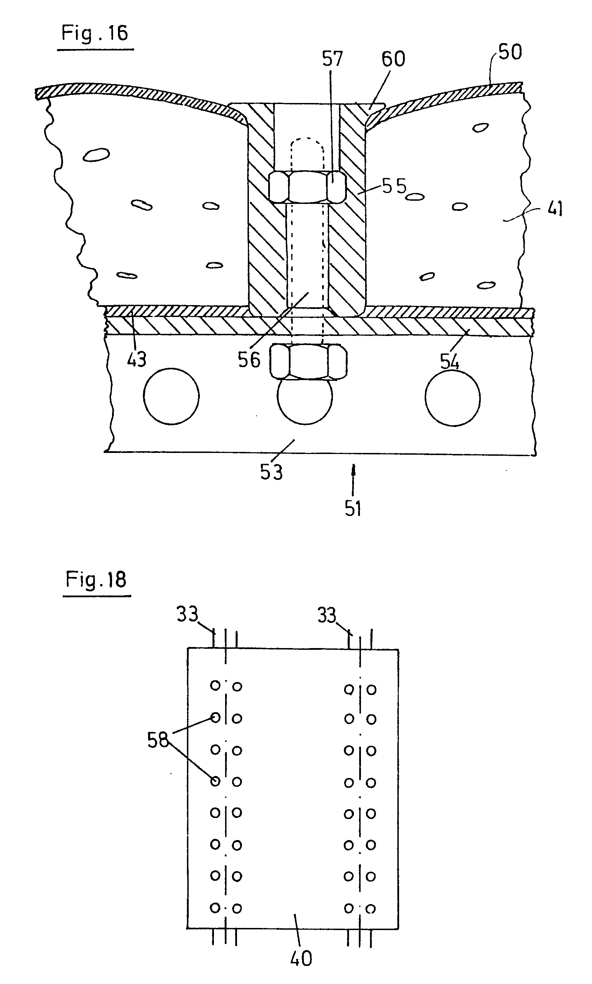

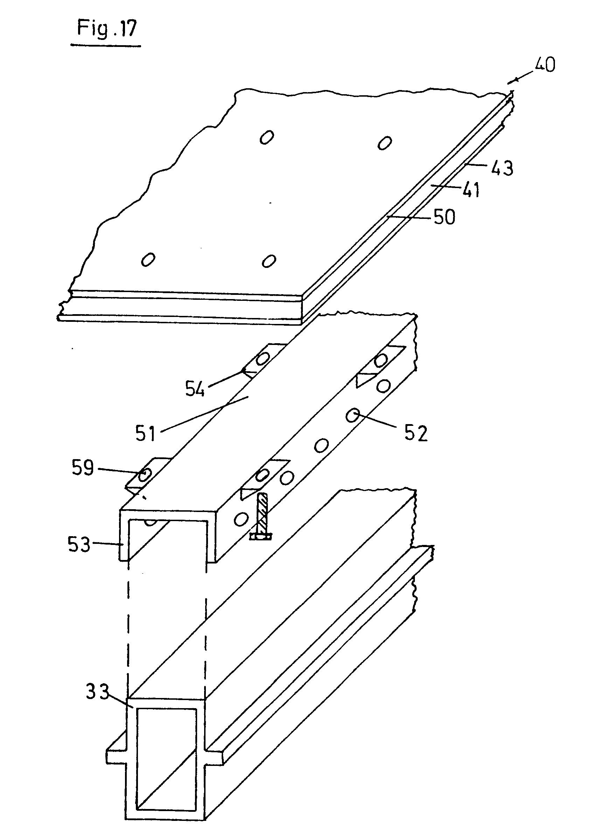

In den Fig. 16, 17 und 18 ist eine besonders vorteilhafte Weiterbildung der Bodenplatte des erfindungsgemässen Wohnwagenaufbaus dargestellt.

Gemäss Fig. 16 weist die Bodenplatte 40 eine untere Kaschierung 43 aus glasfaserverstärktem Kunststoff GFK und eine obere Kaschierung 50 aus GFK oder Aluminium auf.

Zur Verbindung der Bodenplatte 40 mit dem Fahrgestellträger 33 dienen U-Profilstücke 51 mit gelochten Schenkeln 53, deren Löcher 52 bei der Endfixierung eine Lochverschweissung mit dem Fahrzeugträger 33 ermöglichen.

Die U-Profilstücke 51 werden mit nach unten weisenden Schenkeln 53 an der Unterseite der Bodenplatte 40 befestigt, nachdem zuvor mittels Bohrschablonen Löcher 58 in die Bodenplatte 40 gebohrt wurden. In diese Löcher 58 werden von oben her Aufnahmehülsen 55 eingesteckt, in denen sich Haltemuttern 57 drehsicher verankert befinden.

Seitlich aussen und mit den Oberflächen der Rückenteile der U-Profilstücke 51 fluchtend befestigte, z.B. verschweisste Konsolen 54 mit Schraubenlöchern 59 erlauben es, von unten her Schrauben 56 in die Aufnahmehülsen 55 einzuführen und in die Haltemuttern 59 einzuschrauben. Am oberen Rand der Aufnahmehülsen 55 angeformte, kragenförmige Ränder 58 drücken sich dabei unter teilweiser Verformung von oberer Kaschierung 50 und Hartschaumplatte 41 in die Oberfläche bis zum Fluchten ein, so dass die Oberfläche der Bodenplatte 40 glatt bleibt. Eventuelle Löcher im oberen Ende der Aufnahmehülsen 55 können mit Gummi- oder Kunststoffpfropfen verschlossen werden.

Die Aufnahmehülsen 55 bestehen aus sehr hartem Kunststoff. Der breite überstehende Rand derselben hat den Vorteil, dass dieser ein sehr starkes Anziehen der Befestigungsschraube ermöglicht und die Kaschierung aus glasfaserverstärktem Kunststoff der Bodenplatten in seinem Bereich etwas nach innen zieht. Hierdurch wird erreicht, dass der Hülsenrand in bezug zur übrigen Oberfläche der Bodenplatte 40 nicht vorsteht, so dass dieser nach Belegen mit Teppichboden sich nicht auf den Oberflächen abzeichnet.

**Patentansprüche**

1. Wohnwagenaufbau in Form einer geschlossenen selbsttragenden, als Ganzes auf dem Fahrgestell eines Kraftfahrzeugs montierbaren Box, die aus aluminiumbeschichteten Kunststoff-Hartschaumplatten besteht, dadurch gekennzeichnet, dass die Wände und das Dach aus Sandwichplatten (1, 2, 3, 4) bestehen, die beidseitig mit Aluminium beschichtet sind und zwischen den Aluminium-Aussenschichten Kunststoffhartschaum, vorzugsweise Polyurethan, aufweisen, dass deren rechtwinklig aneinandergrenzende Enden in Aluminium-Profilleisten (6) eingesteckt und durch einen speziellen Klebstoff, vorzugsweise einen Zwei-Komponenten-Klebstoff auf Polyurethan-Basis, zu einer Einheit miteinander verbunden sind, dass derselbe eine Bodenplatte (10) besitzt, die mittels eines innen an den aus mit Aluminium beschichteten Kunststoff-Hartschaumplatten (1, 2, 3, 4) gebildeten Wänden umlaufenden Aluminium-T-Profils (7) befestigt ist, dass die Aluminium-Profilleisten (6) die Seitenwände (1,2) rundherum einfassen, derart, dass ein geschlossener Ringanker (45) gebildet ist und dass zur Stabilisierung am unteren Ende der Rückwand (3) und in der Wand (4) quer verlaufende, die aus den umlaufenden Aluminium-Profilleisten (6) gebildeten seitlichen Ringanker (45) miteinander verbindende Aluminium-Profilleisten (46) eingeschweisst sind.

2. Wohnwagenaufbau nach Anspruch 1, dadurch gekennzeichnet, dass unter der Bodenplatte (10) hydraulisch oder mechanisch ausfahrbare Stützen angeordnet sind.

3. Wohnwagenaufbau nach Anspruch 1 und 2, dadurch gekennzeichnet, dass bei einer Ausbildung desselben mit Alkoven sowohl der Alkoven (5) als auch Dach und Rückwand aus einer einzigen, mit Aluminium beschichteten Kunststoff-Hartschaumplatte (3) nahtlos gefertigt sind.

4. Wohnwagenaufbau nach Anspruch 1 bis 3, dadurch gekennzeichnet, dass in der den Alkoven (5), das Dach und die Rückwand des Wohnwagenaufbaus bildenden einstückigen mit Aluminium beschichteten Kunststoff-Hartschaumplatte (3) auf der Innenfläche derselben, quer verlaufende V-förmige Ausschnitte (16) derart angeordnet sind, dass die Aluminiumaussenhaut (17) nicht vom Ausschnitt (16) erfasst ist, und dass die Platte (3) jeweils im Bereich der Ausschnitte (16) um die Aussenhaut (17) derart gebogen ist, dass die Gehrungsflächen (18) aufeinanderliegen, und dass die Gehrungsflächen (18) mittels eines Klebstoffs zusammengeklebt sind.

5. Wohnwagenaufbau nach Anspruch 1 bis 4, dadurch gekennzeichnet, dass die einzelnen Aluminium-Profilleisten (6) an den Enden auf Gehrung geschnitten und im Bereich der aufeinanderstossenden Gehrungskanten (25) miteinander verschweisst sind.

6. Wohnwagenaufbau nach Anspruch 1 bis 5, dadurch gekennzeichnet, dass die Hohlräume der Aluminium-Profilleisten (6) nach Montage mit Kunststoff (26) ausgeschäumt sind.

7. Wohnwagenaufbau nach Anspruch 1 bis 6, dadurch gekennzeichnet, dass die Aluminium-Profilleisten (6) im Querschnitt gesehen, eine viertelkreisförmige Rundung (19) besitzen, welche in geraden Enden (20) ausläuft, auf deren Innenwandung, im Querschnitt gesehen, in Längsrichtung des Profils parallel zueinander verlaufende kleine Zhanleisten (23) angeordnet sind, und dass in radialer Richtung in einem Winkel von 45° ein Profilsteg (21) angeordnet ist, an dessen freiem Ende im rechten Winkel zueinanderstehende, parallel zu den jeweiligen gegenüberliegenden Enden (20) verlaufende Enden (22) angeformt sind, welche ebenfalls auf den Innenwandungen in Längsrichtung des Profils parallel zueinander verlaufende Zahnleisten (23) tragen, und dass ferner auf den Innenwandungen zwischen viertelkreisförmigem Profilteil (19) und geraden Enden (20) sowie an den Enden (22) des radial verlaufenden Steges (21), jeweils einander gegenüberliegend, Anschlagleisten (24) angeformt sind.

8. Wohnwagenaufbau nach Anspruch 1 bis 7, dadurch gekennzeichnet, dass der lichte Abstand zwischen den mit Zahnleisten (23) besetzten Enden (20 bzw. 22) um ein geringes Mass kleiner ist, als die Stärke der aluminiumkaschierten Kunststoff-Hartschaumplatten (1, 2, 3, 4) beträgt, derart, dass die Enden der Platten (1, 2, 3, 4) nach Einstecken darin mittels Pressdruck gehalten sind.

9. Wohnwagenaufbau nach Anspruch 1 bis 8, dadurch gekennzeichnet, dass die Bodenplatte (10) aus einem oben und unten mit wasserfest verleimten Sperrholzplatten (28 bzw. 29) abgedeckten Hartholzrahmen (27) besteht, in dessen Hohlräume (30) Kunststoffschaum als Isolierung eingebracht ist und dass die Unterfläche mit einer durchgehenden Aluminiumplatte (31) abgedeckt ist.

10. Wohnwagenaufbau nach Anspruch 1 bis 9, dadurch gekennzeichnet, dass unter der Bodenplatte (10), vor und hinter den Radkästen (35) Vorratskästen (36) befestigt sind, welche aus aluminiumkaschierten Kunststoff-Hartschaumplatten (3) und Aluminium-Profil- bzw. Winkelleisten (6 bzw. 38) gebildet sind.

11. Wohnwagenaufbau nach Anspruch 1 bis 10, dadurch gekennzeichnet, dass in die Innenräume der Vorratskästen (36) Tanks eingelassen sind.

12. Wohnwagenaufbau nach einem oder mehreren der Ansprüche 1 bis 11, dadurch gekennzeichnet, dass die Kunststoff-Hartschaumplatten (1, 2, 3, 4, 37) mit einer Schicht von ca. 1 mm chromatisiertem Aluminium beschichtet sind und die Kunststoff-Hartschaumschicht eine Stärke von ca. 5 cm besitzt.

13. Wohnwagenaufbau nach einem oder mehreren der Ansprüche 1 bis 8 und 10 bis 12, dadurch gekennzeichnet, dass die Bodenplatte (40) aus einer einstückigen Kunststoff-Hartschaumplatte (41), vorzugsweise aus Polyurethan, besteht, die auf ihrer Oberseite mit einer Sperrholzschicht (42) und auf ihrer Unterseite mit einer Schicht aus glasfaserverstärktem Kunststoff (43) kaschiert ist.

14. Wohnwagenaufbau nach einem oder mehreren der Ansprüche 1 bis 13, dadurch gekennzeichnet, dass die freien Schnittkanten (47) der den Aufbau bildenden, mit Aluminium beschichteten Kunststoff-Hartschaumplatten (Sandwich-Platten) durch eine mit selbstklebendem Kautschuk (48) beschichtete Aluminiumfolie (49) abgedichtet sind.

15. Verfahren zur Herstellung eines Wohnwagenaufbaus nach einem oder mehreren der Ansprüche 1 bis 14, dadurch gekennzeichnet, dass dass das den Alkoven, das Dach und die Rückwand bildende Teil (3) nahtlos aus einer beidseitig mit Aluminium beschichteten Kunststoff-Hartschaumplatte hergestellt wird, indem an den Stellen, an denen Richtungsänderungen in der Platte vorgenommen werden müssen, quer verlaufende, V-förmige Ausschnitte (16) angeordnet werden, wobei die Aluminium-Aussenhaut (17) unversehrt bleibt, derart, dass die Platte (3) jeweils im Bereich der Ausschnitte (16) um die Aussenhaut (17) in einem Winkel von etwa 45° zueinander gebogen werden kann, bis die benachbarten Gehrungsflächen (18) der Platte (3) aufeinanderliegen und das Teil die gewünschte Form eingenommen hat, und dass die Gehrungsflächen (18) mittels eines Zwei-Komponenten-Klebstoffs auf Polyurethan-Basis dauerhaft miteinander verbunden werden, und dass ferner das den Alkoven, das Dach und die Rückwand bildende Teil (3) mit den beiden senkrechten, aus demselben Material bestehenden Wandflächen (1, 2) durch Einstecken der rechtwinklig aneinandergrenzenden Enden derselben in Aluminium-Profilleisten (6) und Verkleben mit denselben durch einen Zwei-Komponenten-Klebstoff auf Polyurethan-Basis zu einer Einheit miteinander verbunden werden.

16. Wohnwagenaufbau nach einem oder mehreren der Ansprüche 1 bis 14, dadurch gekennzeichnet, dass die Bodenplatte (40) als einstückige Kunststoff-Hartschaumplatte (41) ausgebildet ist, welche eine untere Kaschierung (43) aus glasfaserverstärktem Kunststoff GFK sowie eine obere Kaschierung (50) aus glasfaserverstärktem Kunststoff oder Aluminium aufweist, und dass an der Unterseite der Bodenplatte (40) angeordnete, nach unten offene U-Profilstücke (51) mit nach unten weisenden, die Fahrgestellträger (33) seitlich umgreifenden, in ihrer Längsrichtung gelochten Schenkeln (53), die mittels ihrer Löcher (52) mit den Fahrgestellträgern (33) lochverschweissbar sind, mittels aussenseitig an den Schenkeln (53) befestigter Konsolen (54) sowie mittels durch die Konsolen (54) gehaltener und durch in die Bodenplatte (40) eingelassene Aufnahmehülsen (55) geführte Schrauben (56), deren Haltemuttern (57) drehsicher in den Aufnahmehülsen (55) gehalten sind, fest mit der Bodenplatte (40) verbunden sind.

17. Wohnwagenaufbau nach Anspruch 16, dadurch gekennzeichnet, dass die Aufnahmehülsen (55) am oberen Ende einen seitlich nach aussen ragenden Rand (60) aufweisen, und bei festgezogenen Schrauben (56) mit ihrem oberen Ende mit der Oberfläche der Kaschierung (50) im wesentlichen fluchten.

18. Wohnwagenaufbau nach Anspruch 16 und/oder 17, dadurch gekennzeichnet, dass die Aufnahmehülsen (55) aus Kunststoff bestehen.

## Revendications

1. Construction d'une caravane se présentant sous la forme d'une caisse fermée auto-porteuse, susceptible de se monter comme un tout sur le châssis d'un véhicule automobile et faite de plaques de mousse synthétique dure recouverte d'aluminium, caractérisée en ce que les parois et le toit sont constitués par des plaques en sandwich (1, 2, 3, 4), lesquelles sont recouvertes d'aluminium sur leurs deux faces et comportent entre ces couches extérieures d'aluminium de la mousse synthétique dure, préférablement de polyuréthane en ce que leurs extrémités qui se rejoignent à angle droit sont engagées dans des profilés d'aluminium (6) et sont assemblées pour former une unité par une colle spéciale, préférablement une colle à deux composants à base de polyuréthane, en ce que ladite caisse comporte une plaque de plancher (10), laquelle est fixée à l'intérieur aux parois constituées par les plaques (1, 2, 3, 4) en mousse synthétique dure recouvertes d'aluminium, par l'intermédiaire d'un profilé en T (7) également en aluminium, qui entoure ledit plancher, en ce que les baguettes profilées en aluminium (6) s'étendent autour des parois latérales (1, 2) de manière à constituer un ancrage annulaire fermé (45), et en ce que pour assurer la stabilisation, les baguettes (46) en profilé d'aluminium qui relient l'un à l'autre les ancrages latéraux (45) faits également de baguettes (6) en profilé d'aluminium, sont soudées à l'extrémité inférieure de la paroi arrière transversale (3) et dans la paroi (4).

2. Construction de caravane suivant la revendication 1, caractérisée en ce qu'au dessous de la plaque de plancher (10) sont disposés des pieds d'appui susceptibles d'être expandés hydrauliquement ou mécaniquement.

3. Construction de caravane suivant la revendication 1 ou 2, caractérisée en ce que lorsqu'elle est réalisée avec une alcôve, aussi bien celle-ci (5) que le toit et la paroi arrière sont établis sans aucun raccord à partir d'une seule plaque (3) de mousse synthétique dure recouverte d'aluminium.

4. Construction de caravane suivant les revendications 1 à 3, caractérisée en ce que dans la plaque d'une seule pièce en mousse synthétique dure recouverte d'aluminium qui constitue l'alcôve (5), le toit et la paroi arrière de cette caravane et sur la face intérieure de cette plaque, il est prévu des entailles (16) à profil en V qui s'étendent transversalement de manière telle que la feuille d'aluminium extérieure (17) ne soit pas intéressée par celles-ci (16) et que la plaque (3) puisse à chaque fois être repliée autour de cette feuille extérieure (17) au voisinage de ladite entaille (16) de façon que les faces en onglet (18) de l'entaille viennent porter l'une contre l'autre, et en ce que ces faces (18) sont assemblées l'une avec l'autre par une colle.

5. Construction de caravane suivant les revendications 1 à 4, caractérisée en ce que les baguettes individuelles (6) en profilé d'aluminium sont coupées en onglet à leurs extrémités et sont soudées l'une à l'autre dans la zone de leurs bords biseautés (25) appliqués l'un contre l'autre.

6. Construction de caravane suivant les revendications 1 à 5, caractérisée en ce qu'après montage les espaces vides de baguettes (6) en profilé d'aluminium sont remplis de mousse synthétique (26).

7. Construction de caravane suivant les revendications 1 à 6, caractérisée en ce que les baguettes (6) en profilé d'aluminium comportent, vues en coupe, un arrondi (19) en forme de quart de circonférence qui se termine par des extrémités droites (20) sur la face intérieure desquelles, également vue en coupe, sont disposées des petites nervures en forme de dents (23) qui s'étendent parallèlement les unes aux autres dans le sens longitudinal du profilé, et en ce qu'une branche (21) du profil est disposée en direction radiale à un angle de 45° et qu'à l'extrémité libre de cette branche sont conformées des pattes (22) à angle droit l'une avec l'autre et parallèles aux extrémités respectives (20) en vis-à-vis, lesquelles pattes portent également sur leurs faces intérieures des petites nervures (23) en forme de dents qui s'étendent parallèlement les unes aux autres dans le sens longitudinal du profilé, et en ce qu'en outre sur les faces intérieures du profilé, entre la partie (19) en quart de circonférence de celui-ci et les extrémités droites (20), ainsi qu'aux extrémités (22) de la branche (21) qui s'étend radialement, sont conformées des baguettes de butée (24) à cvhaque fois en vis-à-vis.

8. Construction de caravane suivant les revendications 1 à 7, caractérisée en ce que l'écartement entre les extrémités (20, respectivement 22) pourvues de nervures en forme de dents (23) est légèrement inférieur à l'épaisseur des plaques (1, 2, 3, 4) en mousse synthétique dure recouvertes d'aluminium, de façon qu'après qu'elles aient été enfoncées entre elles par pression, les extrémités de ces plaques (1, 2, 3, 4) s'y trouvent retenues.

9. Construction de caravane suivant les revendications 1 à 8, caractérisée en ce que la plaque de plancher (10) est constituée par un cadre en bois dur (27) recouvert par dessus et par dessous de feuilles de contreplaqué (28, respectivement 29) encollées de façon à être imperméables à l'eau, et dans l'espace intérieur (30) desquelles est rapportée de la mousse de matière synthétique à titre d'isolant, et en ce que la face inférieure est recouverte d'une plaque d'aluminium continue (31).

10. Construction de caravane suivant les revendications 1 à 9, caractérisée en ce qu'au dessous de la plaque de plancher (10), en avant et en arrière des logements (35) des roues, sont fixés des coffres à provisions (36), lesquels sont constituées par des plaques de mousse synthétique dure (3) recouvertes d'aluminium et par des baguettes profilées, respectivement des cornières (6, respectivement 38), en aluminium.

11. Construction de caravane suivant les revendications 1 à 10, caractérisée en ce que des citernes sont disposées dans l'espace intérieur des coffres à provisions (36).

12. Construction de caravane suivant une ou plusieurs des revendications 1 à 11, caractérisée en ce que les plaques en mousse synthétique dure (1, 2, 3, 4, 37) sont recouvertes d'une couche d'aluminium chromé d'environ 1 mm et en ce que la couche de mousse synthétique dure comporte une épaisseur d'environ 5 cm.

13. Construction de caravane suivant une ou plusieurs des revendications 2 à 8 et 10 à 12, caractérisée en ce que la plaque de plancher (40) est constituée par une plaque (41) de mousse synthétique dure faite d'une seule pièce, avantageusement en polyuréthane, laquelle est recouverte sur sa face supérieure par une couche de contreplaqué (42) et sur sa face inférieure par une couche (43) de matière synthétique armée de fibres de verre.

14. Construction de caravane suivant une ou plusieurs des revendications 1 à 13, caractérisée en ce que les bords découpés libres (47) des plaques en mousse synthétique dure recouvertes d'aluminium (plaques sandwich) qui constituent la construction sont rendus étanches par une feuille d'aluminium (47) recouverte de caoutchouc auto-collant (48).

15. Procédé pour la réalisation d'une construction de caravane suivant une ou plusieurs des revendications 1 à 14, caractérisé en ce que la partie (3) qui constitue l'alcôve, le toit et la paroi arrière est obtenue sans raccord à partir d'une plaque de mousse synthétique dure recouverte d'aluminium sur ses deux faces, du fait qu'aux endroits où l'on doit réaliser des changements d'orientation dans la plaque, on prévoit des entailles en V (16) orientées transversalement, la feuille d'aluminium extérieure (17) restant non-entaillée, de manière qu'au voisinage de cette entaille (16) la plaque (3) puisse être repliée d'un angle d'environ 45° de part et d'autre autour de ladite feuille extérieure (17) jusqu'à ce que les faces en onglet adjacentes (18) de cette plaque (3) portent l'une contre l'autre et que la pièce ait pris la forme désirée, et en ce que ces faces en onglet (18) sont assemblées l'une avec l'autre de façon durable par une colle à deux composants à base d'uréthane, et en ce qu'en outre la partie (3) qui constitue l'alcôve, le toit et la paroi arrière est assemblée sous forme d'unité avec les deux parois verticales (1, 2), faites de la même matière, par enfoncement des extrémités adjacentes de celles-ci, orientées à angle droit l'une par rapport à l'autre, dans des baguettes d'aluminium profilé (6) et par collage avec celles-ci par le moyen d'une colle à deux composants à base d'uréthane.

16. Construction de caravane suivant une ou plusieurs des revendications 1 à 14, caractérisée en ce que la plaque de plancher (40) est établie sous la forme d'une telle plaque (41) d'une seule pièce en mousse synthétique dure, laquelle comporte un recouvrement inférieur (43) en matière synthétique armée de fibres de verre ainsi qu'un recouvrement supérieur (50) également en matière synthétique armée de fibres de verre ou en aluminium, et en ce qu'à la face inférieure de la plaque de plancher (40) sont rigidement reliées des ailes perforées (53), disposées sous cette plaque (40), qui comportent des pièces profilées (51) à profil en U s'ouvrant vers le bas, percées de trous sur leur longueur, lesquelles entourent latéralement les longerons (33) du châssis porteur et, grâce à leurs trous (52), peuvent être soudées auxdits longerons (33), tandis que par le moyen de consoles (54) fixées extérieurement aux ailes (53) et de vis (56) qui traversent les consoles (54) et sont guidées dans des manchons-récepteurs (55), leurs écrous de serrage (57) étant maintenus à l'encontre de la rotation dans les manchons (55), ces pièces sont rigidement reliées à la plaque de plancher (40).

17. Construction de caravane suivant la revendication 16, caractérisée en ce que les manchons récepteurs (55) comportent à leur extrémité supérieure un rebord (60) qui dépasse vers l'extérieur et en ce qu'une fois les vis (56) serrées, leur extrémité supérieure précitée est substantiellement de niveau avec la face supérieure de recouvrement (50).

18. Construction de caravane suivant la revendication 16 et/ou 17, caractérisée en ce que les manchons récepteurs (55) sont faits en matière plastique.


## Claims

1. A mobile home construction in the form of a closed self-supporting box fittable as a whole on the chassis of a motor vehicle and made of aluminium-covered plastics hard foam panels, characterised in that: the walls and the roof consist of sandwich panels (1 - 4) which are covered on both sides with aluminium and have plastic hard foam, preferably polyurethane, between the outer aluminium layers: the perpendicularly contiguous ends of the panels are received in aluminium section strips (6) and joined together to form a unit by a special adhesive, preferably a two-ingredient adhesive on a polyurethane base; a baseplate (10) is provided and is secured by means of an aluminium T-section which extends around the inside of the sandwich panels (1 - 4), and the strips (6) engage all the way round the side walls (1, 2) to form a closed ring anchor (45); and to provide stabilization aluminium section strips (46) which extend transversely at the bottom end of the back wall (3) and in the wall (4) and which interconnect the lateral ring anchors (45) are welded in.

2. A mobile home construction according to claim 1, characterised in that props adapted to be extended hydraulically or mechanically are disposed below the floor or baseplate (10).

3. A mobile home construction according to claims 1 and 2, characterised in that when an alcove is provided, both the alcove (5) and the roof and the back wall are produced seamlessly from a single aluminium-covered plastics hard foam panel (3).

4. A mobile home construction according to claims 1 to 3, characterised in that the inner surface of the panel (3) providing an integral connection between the alcove (5), the roof and the back wall of the mobile home construction and covered with aluminium is formed with transverse V-shaped grooves or recesses or the like (16) so disposed that the outer skin (17) of aluminium is not covered by the recess (16); and the panel (3) is so bent around the outer skin (17) near the recesses (16) that the mitred surfaces (18) are disposed one on another, the latter surfaces being stuck together by means of an adhesive.

5. A mobile home construction according to claims 1 to 4, characterised in that the various section strips (6) are mitre-cut at their ends and welded together near the abutting mitred edges (25).

6. A mobile home construction according to claims 1 to 5, characterised in that the voids in the aluminium strips (6) are foamed out with plastics (26) after assembly.

7. A mobile home construction according to claims 1 to 6, characterised in that as considered in cross-section the strips (6) have a quadrant-like rounding (19) terminating in straight ends (20) having on their inside wall, as considered in cross-section, small toothed strips (23) extending parallel to one another lenghtwise of the strip cross-section; and a profiled web (21) is disposed radially at an angle of 45° and has formed on its free end corners (22) which are at right-angles to one another and which extend parallel to the opposite ends (20) and which also have toothed strips (23) so disposed on the inner walls as to extend parallel to one another and lenghtwise of the cross-section; and abutment strips (24) are formed on the inner walls between a quadrant-shaped part (19) and straight ends (20) and on the ends (22) of the radial web (21), the abutment strips (24) being disposed opposite one another.

8. A mobile home construction according to claims 1 to 7, characterised in that the internal distance between those ends (20, 22) which have toothed strips (23) is slightly less than the thickness of the aluminium-lined panels (1 - 4) so that the panel ends are retained by pressure once they have been pushed in.

9. A mobile home construction according to claims 1 to 8, characterised in that the floor or baseplate (10) is a hardwood frame (27) covered at the top and at the bottom with waterproofed plywood panels (28, 29), plastics foam being introduced into the voids (30) of the frame (27) as insulation; and the bottom surface is covered by a continuous aluminium panel (31).

10. A mobile home construction according to claims 1 to 9, characterised in that supply chests or boxes or the like (36) are secured below the floor or baseplate (10) before and after the wheel boxes (35) and are embodied by aluminium-lined plastics hard foam panels (3) and aluminium section and angle strips (6 and 38 respectively).

11. A mobile home construction according to claims 1 to 10, characterised in that tanks are let in to the interiors of the supply boxes or chests (36).

12. A mobile home construction according to one or more of claims 1 to 11, characterised in that the plastics hard foam panels (1 - 4, 37) have a layer of approximately 1 mm of chromated aluminium and the plastics hard foam layer has a thickness of approximately 5 cm.

13. A mobile home construction according to one or more of claims 1 to 8 and 10 to 12, characterised in that the floor or baseplate (40) is a unitary plastics hard foam panel (41), preferably of polyurethane, is lined on top with a plywood layer (42) nd is lined on the bottom with a layer of glass fibre reinforced plastics (43).

14. A mobile home construction according to one or more of claims 1 to 13, characterised in that the free cut edges of the aluminium-covered plastics hard foam panels (sandwich panels) forming the construction are sealed by an aluminium foil (49) coated with self-adhesive rubber (48).

15. A method of producing a mobile home construction according to one or more of claims 1 to 14, characterised in that the part (3) forming the alcove, roof and back wall is produced seamlessly from a plastics hard foam panel covered on both sides with aluminium, transverse V-shaped recesses (16) being present at the places where changes of direction are required in the panel, the outer skin (17) of aluminium remaining undamaged, so that the panel (3) can be bent in the region of the recesses (16) around the outer skin (17) at an angle of approximately 45° until the adjacent mitred surfaces (18) of the panel (3) engage with one another and the part has taken up the required shape; the mitred surfaces (18) are stuck together permanently by means of a two-ingredient adhesive on a polyurethane base; and the part (3) forming the alcove, roof and back wall is connected to the two perpendicular wall surfaces (1, 2) of the same material by insertion of the perpendicularly contiguous ends thereof in aluminium profils strips (6) and by sticking to them by a two-ingredient adhesive on a polyurethane base to form a unit.

16. A mobile home construction according to one or more of claims 1 to 14, characterised in that the floor or baseplate (40) is an integral plastics hard foam panel (41) having a bottom lining (43) of glass fibre reinforced plastics GFK and a top lining (50) of glass fibre reinforced plastics or aluminium; and channel section members (51) disposed on the underside of the floor plate or panel (40) and open towards the bottom and having downwardly extending arms (53) which engage laterally around the chassis bearers (33) and which are perforated along their length and which can be welded by way of their apertures (52) to the chassis members (33) are rigidly secured to the floor panel (40) by means of brackets (54) secured to the arms (53) and by means of screws (56) which are retained by the brackets (54) and which extend through receiving sleeves (55) let into the floor panel (40) and whose retaining nuts (57) are secured non-rotatably in the sleeves (55).

17. A mobile home construction according to claim 16, characterised in that the sleeves (55) have at the top end an outwardly and laterally projecting edge (60), with the screws (56) tightened, are substantially in alignment at their top end with the surface of the lining (50).

18. A mobile home construction according to claim 16 and/or 17, characterised in that the sleeves (55) are made of plastics.

FIG. 1

0 057 909

FIG. 2

FIG.3

0 057 909

0 057 909

FIG. 4
Schnitt I-I

FIG. 5
Schnitt II-II

FIG.6

FIG.7

FIG. 8

0 057 909

0 057 909

FIG. 9

FIG. 10

FIG. 11

FIG. 12

FIG. 13
Schnitt III-III

FIG. 14

FIG.15

0 057 909

Fig . 16

Fig . 18

41

## Fig .17